# EUROPEAN PATENT APPLICATION

(11) **EP 1 551 116 A1**
(43) Date of publication of application: **06.07.2005**
(21) Application number: 03797710.5
(22) Date of filing: 19.09.2003
(51) Int. Cl.: H04B 7/26

(54) **RADIO COMMUNICATION SYSTEM, RADIO COMMUNICATION DEVICE, AND RADIO COMMUNICATION METHOD**

(30) Priority: 20.09.2002 JP 2002274978
(71) Applicant: Sony Corporation, Tokyo 141-0001 (JP)
(72) Inventor: MAEDA, Teruya, SONY CORPORATION, Tokyo 141-0001 (JP)
(74) Representative: Robinson, Nigel Alexander Julian
(86) International application number: PCT/JP2003/012023
(87) International publication number: WO 2004/028040

(57) **Abstract**

A wireless communication system shown in Fig. 4 relates to a system for performing wireless communication processing between a stationary base station (101) with wireless communication function and display apparatuses (401, 402) with wireless communication function. The base station (101) has a plurality of antennas (501 and 502) each having a directional pattern in a predetermined direction. The display apparatuses (401 and 402) are set as a plurality of the communication targets which are capable of making wireless communication with the base station (101). The base station (101) performs identification processing of the communication-targeted display apparatuses (401 and 402) or the like located within a communication area created by each of the directional patterns of the antennas (501 and 502); storage processing of a correspondence relationship between each of the communication-targeted display apparatuses (401 and 402) or the like and each of the antennas (501 and 502); and at the time of making wireless communication, performs selection processing of an antenna (501 or 502) which corresponds to the pertinent display apparatus (401 or 402) etc. based on the antenna selection information.

## Description

### TECHNICAL

The present invention relates to a wireless communication system, a wireless communication apparatus, and a wireless communication method, which are preferable for use in applications such as a wireless LAN system and a wireless communication apparatus (an access point) for a base station, that utilize 2. 4GHz band or 5.2GHz band, etc. Specifically, the present invention relates to a system for making wireless communication processing between a wireless base station and an arbitrary wireless communication apparatus, wherein a plurality of antenna bodies each having a directional pattern in a predetermined direction are mounted on a wireless communication apparatus for a base station, and a communication-targeted wireless terminal apparatus located within a communication area created by each of the directional patterns of these antenna bodies is identified, and a correspondence relationship between the communication-targeted wireless terminal apparatus and each of the antenna bodies is stored. The present invention allows the wireless communication system, at the time of making wireless communication, to select the optimum antenna body corresponding to the pertinent wireless terminal apparatus based on storage processing of the correspondence relationship with the antenna body, as well as allows executing wireless communication processing with the wireless terminal apparatus located within the pertinent directivity by use of the optimum antenna body selected herein.

### BACKGROUND ART

In recent years, cellular phones and information-processing apparatuses having wireless communication functions such as electronic mail transceiver apparatuses have been often used. Besides these kinds of information-processing apparatuses, network-information-processing systems have been being employed, in which a wireless LAN card is mounted onto a notebook-size personal computer to constitute a wireless terminal apparatus, and a wireless communication line is constituted between the pertinent wireless terminal apparatus and another information processing apparatus via an access point, thereby making data communication processing between these apparatuses.

According to the wireless communication apparatus for wireless LAN base station of this kind, an antenna body having a wavelength which corresponds to a frequency to be used is provided. As a method for attaching the antenna body, either one of the methods where the antenna body is attached to the outside of the main body apparatus and a method where the antenna body is attached to the inside of the main body apparatus is employed. When the antenna body is attached to the outside of the main body apparatus, an antenna body having a directional pattern of 360° can be installed onto the wireless communication apparatus for a base station.

When an antenna body is attached to the inside of the main body apparatus, a method where two antenna bodies having different directional patterns from each other are installed onto the wireless communication apparatus for a base station is employed. For example, one diversity antenna is attached to the inner front side of apparatus main body in such a manner that a directional pattern thereof is formed in a frontward direction of the apparatus main body, whereas another diversity antenna is attached to the inner back side of the wireless communication apparatus in such a manner that a directional pattern thereof is formed in the backward direction of the apparatus main body. This arrangement is employed in order to divide the communication area into the front side and the backside of the wireless communication apparatus to make wireless communication processing.

By the way, according to the wireless communication apparatus for a base station in a conventional method in which the antenna bodies are attached inside the main body apparatus, the antenna bodies are switched between the case where wireless communication is made with the wireless terminal apparatus located within the communication area at its front side and the case where wireless communication is made with the wireless terminal apparatus located within the communication area at its back side.

However, the wireless communication apparatus of this kind employs an antenna control method in which, if the wireless terminal apparatuses located within the front side communication area and within the back side communication area are recognized respectively, in order to simplify the antenna control, when data is to be newly transmitted, the data transmission is executed using the antenna from which this wireless communication apparatus has received the data last.

Therefore, if a status occurs where immediately after data is received from the wireless terminal apparatus located within the front side communication area, data is to be transmitted to a wireless terminal apparatus located within the back side communication area, the antenna body from which data has been received last is used, so that it may not transmit data to the wireless terminal apparatus located within the back side communication area from the optimum antenna body. A problem that communication contents are interrupted and wireless communication processing cannot be performed optimally may arise.

### DISCLOSURE OF THE INVENTION

A wireless communication system according to the present invention is a system for making wireless communication processing between a wireless base station and an arbitrary wireless terminal apparatus, the system comprising a wireless communication apparatus for a base station, the apparatus including a plurality of antenna bodies each having a directional pattern in a predetermined direction, and a wireless terminal apparatus, to be a communication target, that is capable of making wireless communication with the wireless communication apparatus for the base station. The wireless communication apparatus for the base station regularly or irregularly performs identification processing of the communication-targeted wireless terminal apparatus located within a communication area of each of the directional patterns of the antenna bodies; it performs storage processing of a correspondence relationship between the communication-targeted wireless terminal apparatus and each of the antenna bodies; and at the time of making wireless communication, it performs selection processing of the antenna body which corresponds to the pertinent wireless terminal apparatus based on the storage processing.

According to the wireless communication system of the present invention, when wireless communication is made between the wireless base station and an arbitrary wireless communication apparatus, there exists the wireless communication apparatus for the base station including a plurality of antenna bodies each having a directional pattern in a predetermined direction and, with respect to this wireless communication apparatus for the base station, a plurality of wireless terminal apparatuses, to become a communication target, that are capable of wireless communication is provided. Based on this assumption, for example, the communication-targeted wireless terminal apparatuses results in being located at their respective positions within the communication area created by the predetermined directional pattern of the wireless communication apparatus for the base station, or are allowed to move between the communication areas created by the directional patterns.

For example, in the wireless communication apparatus for the base station, the identification processing of the communication-targeted wireless-terminal apparatus located within the communication area created by each of the directional patterns of the antenna bodies is regularly or irregularly performed, and then the storage processing of the correspondence relationship between the communication-targeted wireless terminal apparatus and each of the antenna bodies is performed. At the time of making wireless communication, the selection processing of the antenna body that corresponds to the pertinent wireless terminal apparatus is performed based on this storage processing. As a result, the optimum antenna body which corresponds to the pertinent wireless terminal apparatus can be always selected, and thus, even in the case where immediately after data is received from the wireless terminal apparatus located within the front side communication area, the data is transmitted to the wireless terminal apparatus located within the back side communication area, it is possible to perform wireless communication processing with the wireless terminal apparatus located within the communication area created by the pertinent directional pattern using the optimum antenna body. Further, as compared with the conventional method, the wireless communication processing can be made optimally without interruption of the communication contents. Therefore, employment of this system to an access point etc. of a wireless LAN etc. greatly contributes to an improvement of the wireless communication quality.

A wireless communication apparatus according to the invention is a wireless communication apparatus for arbitrarily making wireless communication with a wireless terminal apparatus, to become a communication target, the apparatus comprising a plurality of antenna bodies each having a directional pattern in a predetermined direction, and a controller for allowing identifying a communication-targeted wireless terminal apparatus located within a communication area created by each of the directional patterns of the antenna bodies, and recognizing a correspondence relationship between the pertinent communication-targeted wireless terminal apparatus and each of the antenna bodies, wherein the controller performs, at the time of making wireless communication, selection processing of the antenna body which corresponds to the pertinent wireless terminal apparatus, and communication processing with the wireless terminal apparatus located within the pertinent directivity using the selected antenna body.

According to the wireless communication apparatus of the present invention, when wireless communication processing is arbitrarily made with the communication-targeted wireless terminal apparatus, a plurality of antenna bodies each having a directional pattern in a predetermined direction is provided and the controller identifies the communication-targeted wireless terminal apparatus located within the communication area created by each of the directional patterns of the antenna bodies, and recognizes the correspondence relationship between the pertinent communication-targeted wireless terminal apparatus and each of the antenna bodies. Based on this assumption, at the time of making wireless communication, the controller selects the antenna body, which corresponds to the pertinent wireless terminal apparatus, and makes communication processing with the wireless terminal apparatus located within the pertinent directivity using thus-selected antenna body. This arrangement makes it possible to always make the wireless communication processing with the wireless terminal apparatus located within the pertinent directivity using the optimum antenna body. Further, as compared with the conventional method, the wireless communication can be made optimally without interruption of the communication contents. Therefore, employment of this apparatus greatly contributes to an improvement of the wireless communication quality.

A wireless communication method according to the present invention is a method for arbitrarily making wireless communication with a wireless terminal apparatus, to become a communication target, the method comprising the steps of providing a plurality of antenna bodies each having a directional pattern in a predetermined direction to a wireless communication apparatus for a base station, and preparing the communication-targeted wireless terminal apparatus which is capable of wireless communication within a communication area created by the arbitrary directional pattern, in the wireless communication apparatus for the base station, regularly or irregularly identifying the communication-targeted wireless terminal apparatus located within a communication area created by each of the directional patterns of the antenna bodies, storing a correspondence relationship between the identified communication-targeted wireless terminal apparatus and each of the antenna bodies, at the time of making wireless communication, selecting the antenna body which corresponds to the pertinent wireless terminal apparatus, and performing communication processing with the wireless terminal apparatus located within the pertinent directivity using the selected antenna body.

According to the wireless communication method of the present invention, when wireless communication processing is arbitrarily made with the communication-targeted wireless terminal apparatus, it is possible to make the wireless communication processing with the wireless terminal apparatus located within the communication area created by the pertinent directional pattern always using the optimum antenna body. Further, as compared with the conventional method, the wireless communication processing can be made optimally without interruption of the communication contents.

### BRIEF DESCRIPTION OF THE DRAWINGS

Fig. 1 is a conceptual diagram showing a configuration of a wireless communication system 10 as a first embodiment according to the present invention;
Fig. 2 is a flowchart showing exemplary processings for identifying terminals and for making a wireless transmission in the wireless communication system 10 shown in Fig. 1;
Fig. 3 is a time chart showing an exemplary operation of the base station 101 for a base station shown in Fig. 1;
Fig. 4 is a perspective view showing a configuration of a wireless LAN system 100 as a second embodiment according to the present invention;
Fig. 5 is a perspective view showing exemplary attached states of the antenna in a stationary base station 101;
Figs. 6A and 6B are conceptual diagrams respectively showing exemplary directional patterns of the antennas 501, 502;
Fig. 7 is a conceptual diagram showing exemplary formations of communication areas I, II of the base station 101;
Fig. 8 is a block diagram showing an inner configuration of the base station 101;
Fig. 9 is a block diagram showing an inner configuration of each display apparatus 401, 402 etc;
Fig. 10 is a flowchart showing an exemplary communication processing (No. 1) in the base station 101 of the wireless LAN system 100;
Fig. 11 is a flowchart showing an exemplary communication processing (No. 2) in the base station 101 of the wireless LAN system 100; and
Figs. 12A and 12B are flowcharts respectively showing exemplary communication processing (No.1) performed in each of the display apparatuses 401 [#1], 402 [#2] etc.

### BEST MODE FOR CARRYING OUT THE INVENTION

The present invention aims to provide a wireless communication system, a wireless communication apparatus, and a wireless communication method, which are capable of optimally executing wireless communication processing between a wireless base station and a communication-targeted wireless terminal apparatus as well as capable of increasing the wireless communication quality thereof.

Hereinafter, an embodiment of a wireless communication system, a wireless communication apparatus, and a wireless communication method according to the present invention will be described with reference to the drawings.

### (1) First embodiment

The first embodiment is an embodiment as an upper concept in which in case of wireless communication processing between a wireless base station and an arbitrary wireless communication apparatus, a wireless communication apparatus for a wireless base station includes a plurality of antenna bodies each having a directional pattern in a predetermined direction. In this embodiment, the wireless communication apparatus identifies each communication-targeted wireless terminal apparatus located within a communication area created by each of the directional patterns of the antenna bodies, and stores a correspondence relationship between the communication-targeted wireless terminal apparatus and each of the antenna bodies is stored. This embodiment allows, at the time of making wireless communication, selecting the optimum antenna body corresponding to the pertinent wireless terminal apparatus based on the storage processing, as well as allows executing wireless communication processing with the wireless terminal apparatus located within the pertinent directivity by use of the optimum antenna body thus selected herein.

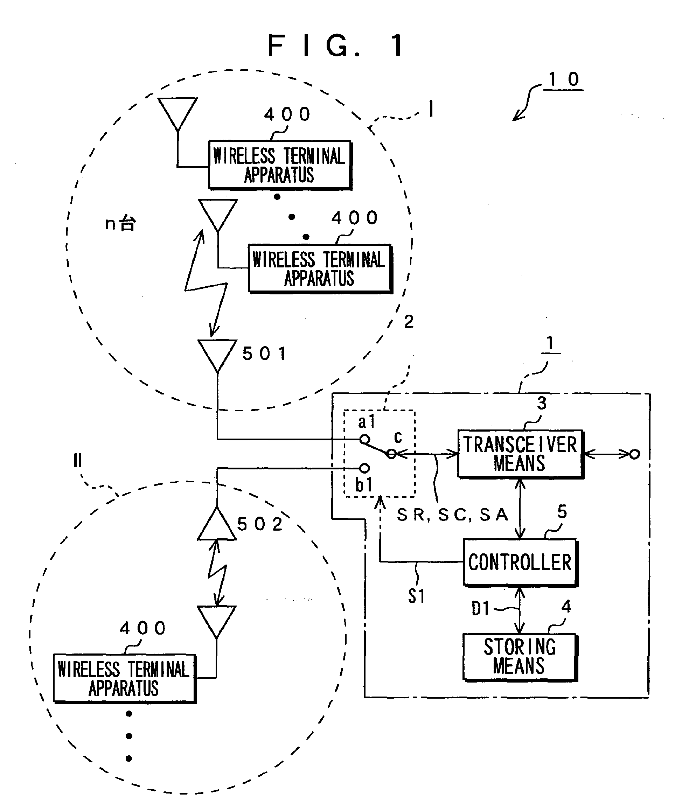

The wireless communication system 10 shown in Fig. 1 is a system for performing wireless communication processing between a wireless communication apparatus for a base station and an arbitrary wireless terminal apparatus. The system 10 is preferable for use in a wireless LAN system etc. which utilizes 2.4GHz band or 5.2GHz band, etc. The system 10 includes a wireless communication apparatus 1 for a base station. The wireless communication apparatus 1 is provided with a plurality of antenna bodies each having a directional pattern in a predetermined direction. In this embodiment, two diversity antennas (hereinafter, simply referred to as "antennas 501, 502") are used as the plurality of antenna bodies.

With respect to the wireless communication apparatus 1, for example, two wireless terminal apparatuses 400 are prepared beforehand as wireless terminal apparatuses, to become a plurality of communication targets, that are capable of making wireless communication. In the system 10, one of the communication-targeted wireless terminal apparatuses 400 is located within a communication area I created by the predetermined directional pattern of the wireless communication apparatus 1, whereas the other communication-targeted wireless terminal apparatus 400 is located within a communication area II. Alternatively, these communication-targeted wireless terminal apparatuses 400 move between the communication areas I, II created by these directional patterns. For example, one of the wireless terminal apparatuses 400 is located in the directional pattern of the antenna 501, whereas the other wireless terminal apparatus 400 is located in the directional pattern of the antenna 502.

The wireless communication apparatus 1 performs identification processing of the communication-targeted wireless terminal apparatus 400 located within the communication area created by each of the directional patterns of the antennas 501, 502, storage processing of a correspondence relationship between the communication-targeted wireless terminal apparatus 400 and each of the antennas 501 and 502 or the like, and at the time of making the wireless communication, and performs selection processing of either one of the antennas 501, 502 which corresponds to the pertinent wireless terminal apparatus 400 based on the reading processing of the information stored beforehand.

In this system 10, the wireless communication apparatus 1 is structured to transmit data for confirmation of the communication area regularly or irregularly to the communication-targeted wireless terminal apparatus 400. Due to this structure, it is possible to detect the correspondence relationship between the optimum antenna 501 or 502 and the pertinent wireless terminal apparatus 400, even when the communication-targeted wireless terminal apparatus 400 moves between the communication areas created by these directional patterns.

In this system 10, the wireless communication apparatus 1 includes, in order to arbitrarily make wireless communication with the communication-targeted wireless terminal apparatus 400, for example, two antennas 501, 502, an antenna switch 2, transceiver means 3, storing means 4, and a controller 5. As the antennas 501, 502, diversity antennas are employed for example. The antenna 501 is attached to the inner front side of the main body of the wireless communication apparatus so as to have a directional pattern at its front side. The antenna 502 is attached to the inner back side of the main body so as to have a directional pattern at its back side. These two antennas 501, 502 are connected to the antenna switch 2.

The antenna switch 2 has contact points a1, b1, and a common contact point c. The antenna 501 is connected to the contact point a1 of the antenna switch 2, whereas the antenna 502 is connected to the contact point b1 thereof. The antenna switch 2 is structured so as to switch the antennas 501, 502 to each other based on an antenna selection signal S1. The antenna selection signal S1 is supplied from the controller 5. To the antenna switch 2, the transceiver means 3 is connected for transmitting a reference signal SR, a connection response signal SA, data DOUT etc. to the communication-targeted wireless terminal apparatus 400, and for receiving a connection request signal SC from the communication-targeted wireless terminal apparatus 400. The common contact point c of the antenna switch 2 is connected to the transceiver means 3.

To the transceiver means 3, the controller 5 is connected for identifying the communication-targeted wireless terminal apparatus 400 located within the communication area created by each of the directional patterns and for recognizing the correspondence relationship between the pertinent communication-targeted wireless terminal apparatus 400 and each of the antennas 501, 502. The controller 5 selects, at the time of making wireless communication, either one of the antennas 501, 502 which corresponds to the pertinent wireless terminal apparatus 400, and makes communication processing with the wireless terminal apparatus 400 located in the pertinent directional pattern using the selected antenna 501 or 502.

To the controller 5, the storing means 4 is connected for storing antenna selection information D1 indicative of the correspondence relationship between the communication-targeted wireless terminal apparatus 400 and each of the antennas 501, 502. For example, the correspondence relationship between the communication-targeted wireless terminal apparatus 400 and each of the antennas 501, 502 is translated into the form of an antenna table. A RAM (a memory which is writable and readable whenever necessary) is employed as the storing means 4 and the RAM is also used as a work memory. In this embodiment, the antenna selection information D1 is information for selecting either one of two antennas 501, 502. To the antenna selection information D1, ID information indicative of the communication-targeted wireless terminal apparatus 400 located within the communication area created by each of the directional patterns is corresponded so as to constitute an unillustrated antenna table. Using this antenna table, the optimum antenna 501 or 502 corresponding to the communication-targeted wireless terminal apparatus 400 located within the communication area created by each of the directional patterns can be managed.

The antenna selection information D1 is updated in order to make it possible to use the optimum antenna 501 or 502 at the time of making wireless communication. For example, the controller 5 executes memory control in such a manner that the contents in the storing means 4 are rewritten (overwritten). As a result, the contents of the antenna table are updated. This is because occurrence of a case where the communication-targeted wireless terminal apparatus 400 moves from the communication area created by the pertinent directional pattern into the other communication area created by the other directional pattern is supposed. For this reason, the controller 5 is structured so as to regularly or irregularly transmit data for confirming the communication area to the communication-targeted wireless terminal apparatus 400. For example, when the power supplies of both of the wireless communication apparatus 1 and the wireless terminal apparatus 400 etc. are turned on, the wireless communication apparatus 1 recognizes the communication-targeted wireless terminal apparatus 400 located within the communication area created by each of the directional patterns. This structure enables the correspondence relationship between the pertinent wireless terminal apparatus 400 and the optimum antenna 501 or 502 to be detected.

Next, a wireless communication method according to the present invention will be described by way of an exemplified processing made in the case where the terminal is recognized and wireless data is transmitted in the pertinent wireless communication system 10.

In the first embodiment, when wireless communication processing is arbitrarily made with the communication-targeted wireless terminal apparatus 400, the pertinent wireless communication apparatus 1 is provided with two antennas, that is, the antenna 501 having a directional pattern in a front side direction of the main body of the wireless communication apparatus, and the antenna 502 having directional pattern in a back side direction of the main body of the wireless communication apparatus, and the communication-targeted wireless terminal apparatus 400 capable of making wireless communication within the communication area created by each of the directional patterns is prepared beforehand. In the state where such two antennas 501, 502 having different directivities from each other are provided, the wireless communication apparatus 1 transmits a reference signal SR to the communication-targeted wireless terminal apparatuses 400 located within these directivities through these antennas 501, 502 alternately. At this time, since the reference signal SR is alternately transmitted through the antennas 501, 502, the range where the communication-targeted wireless terminal apparatus 400 can recognize the reference signal SR is enlarged. In this manner, the communication-capable distance between the wireless communication apparatus 1 and the wireless terminal apparatus 400 can be elongated. Further, as shown in Fig. 1, two communication-targeted wireless terminal apparatuses 400 are assumed so that one of the wireless terminal apparatuses 400 is located toward the directional pattern of the antenna 501 and the other of the wireless terminal apparatuses 400 is located toward the directional pattern of the antenna 502.

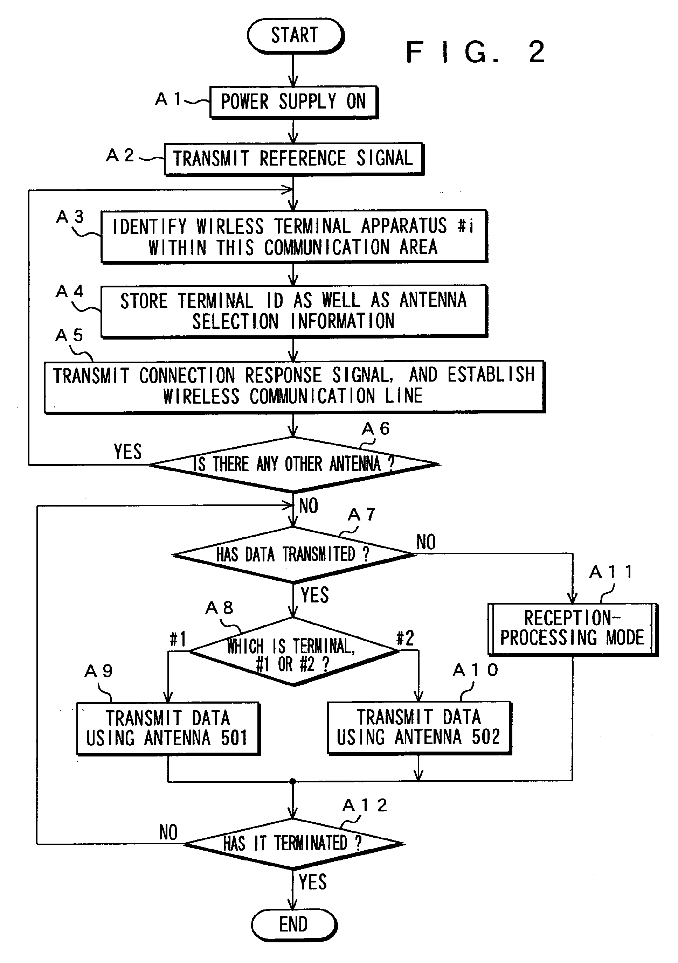

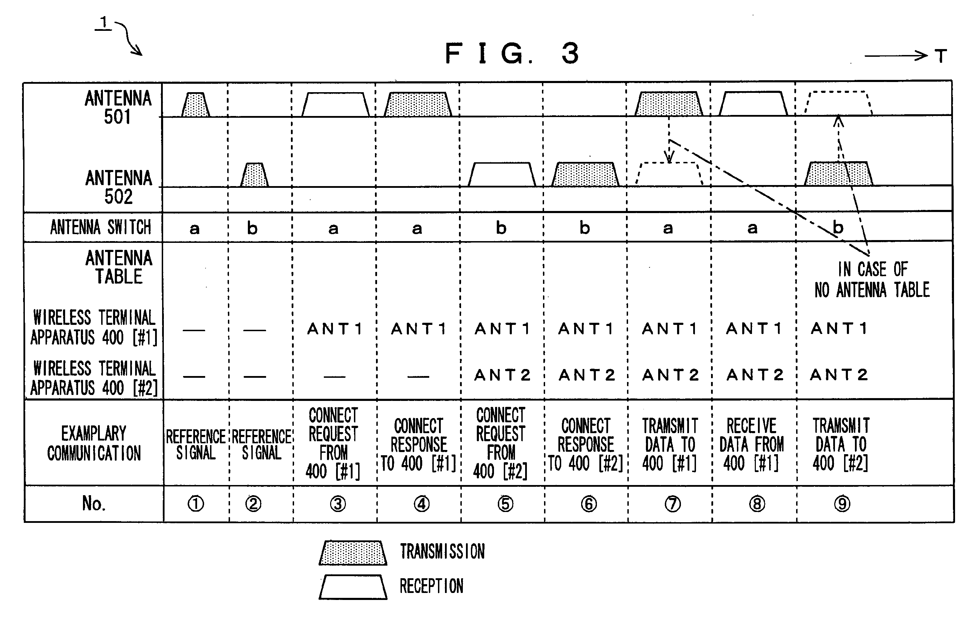

Taking the above arrangements as the preconditions for the processing, a power supply is turned on in Step A1 in the flowchart shown in Fig. 2. Then, the process proceeds to Step A2 where the reference signal SR is transmitted from the antenna 501 shown in Fig. 1 to the communication-targeted wireless terminal apparatus 400 located within the communication area created by one of the directional patterns (see ① in Fig. 3). Subsequently, the reference signal SR is transmitted from the antenna 502 to the communication-targeted wireless terminal apparatus 400 located within the communication area created by the other directional pattern (see ② in Fig. 3).

After that, in Step A3, the wireless communication apparatus 1 is made to identify the individual communication-targeted wireless terminal apparatuses 400 located within the communication area created by each of the directional patterns of the antennas 501, 502. At this time, one of the wireless terminal apparatuses 400 which has received the reference signal SR from the antenna 501 transmits a connection request signal SC to the wireless communication apparatus 1 to notify a request to connect its wireless communication line. The wireless communication apparatus 1 receives the connection request signal SC from one of the wireless terminal apparatuses 400 (see ③ in Fig. 3).

Next, storage processing of the correspondence relationship between the communication-targeted wireless terminal apparatus 400 thus identified and the antenna 501 is performed in Step A4. At this time, upon receiving the connection request signal SC from one of the wireless terminal apparatuses 400, the wireless communication apparatus 1 describes, for example, "#1" on the antenna table using the controller 5 as the terminal ID of one of the wireless terminal apparatuses 400, and registers (sets) "ANT1" as the optimum antenna body. As a result, antenna-setting information D1 is stored. Here, the wireless terminal apparatus 400 having the terminal ID of "#1" is described as the wireless terminal apparatus 400 "#1".

Further, the process proceeds to Step A5 where the wireless communication apparatus 1 transmits a connection response signal SA to the wireless terminal apparatus 400 [#1] using the antenna 501 (see ④ in Fig. 3). Then, the wireless terminal apparatus 400 [#1] is connected with the wireless communication apparatus 1 to establish the wireless communication line therebetween.

After that, the process proceeds to Step A6 where it is determined whether or not the above processing has been made to another antenna. The determination at this time is made based on whether or not the processing for the antenna 501 and the processing for the antenna 502 has been executed in Steps A3 to A5, because two antennas 501, 502 are attached to the pertinent wireless communication apparatus 1. Therefore, when there is another antenna to be subjected to the above processing, the process returns to Step A3 where the other communication-targeted wireless terminal apparatus 400 located within the communication area created by the directional pattern of the antenna 502 is identified. At this time, the other wireless terminal apparatus 400 which has already received the reference signal SR from the antenna 502 transmits a connection request signal SC to the wireless communication apparatus 1 to notify the request to connect its wireless communication line. The wireless communication apparatus 1 receives the connection request signal SC from the other wireless terminal apparatus 400 (see ⑤ in Fig. 3).

Upon receiving this notification, the process proceeds to Step A4 where the wireless communication apparatus 1 adds "#2" as the terminal ID of the other wireless terminal apparatus 400 on the antenna table using the controller 5, and sets "ANT2" as the optimum antenna body. As a result, antenna-setting information D1 is stored. Here, the wireless terminal apparatus 400 having the terminal ID of "#2" is described as the wireless terminal apparatus 400 [#2]. Further, the process proceeds to Step A5 where the connection response signal SA is transmitted from the antenna 502 to the wireless terminal apparatus 400 [#2] so as to connect the wireless terminal apparatus 400 [#2] with the wireless communication apparatus 1, thereby establishing the wireless communication line therebetween (see ⑥ in Fig. 3). Table 1 shows an exemplary relationship between the terminal ID of n units of the wireless terminal apparatuses 400 and each of their optimum antenna bodies "ANT1", "ANT2". The antenna table of the first embodiment is created based on Table 1.

**TABLE 1**

| ANTENNA TABLE | |
|---|---|
| Terminal ID | Antenna |
| #1 | ANT1 |
| #2 | ANT2 |
| #3 | ANT1 |
| : | : |
| #n | ANT1 |

When there is no antenna to be subjected to the above processing among such antennas 501, 502, the process proceeds to Step A7 where the wireless communication apparatus 1 determines whether or not data should be wireless-transmitted. The determination at this time is made based on whether or not a command, etc. for transmitting data from the pertinent wireless communication apparatus 1 to the wireless terminal apparatus 400 [#1] or the wireless terminal apparatus 400 [#2] is detected. Therefore, when data is to be transmitted, the process proceeds to Step A8 where either one of the antennas 501, 502 is selected which corresponds to the communication-targeted wireless terminal apparatus 400 to which the data is to be transmitted.

### [In the case where data is transmitted from the wireless communication apparatus 1 to the wireless terminal apparatus 400 [#1]]

In this case, the antenna table is referred by the wireless communication apparatus 1 in Step A8, and the optimum antenna body [ANT1] for the wireless terminal apparatus 400 [#1] is selected. Then, based on the antenna selection information D1, an antenna selection signal S1 is outputted to the antenna switch 2. As a result, the contact point a1 connected to the antenna 501 is connected with the transceiver means 3. By use of thus-connected antenna 501, in Step A9, data is transmitted to the wireless terminal apparatus 400 [#1] located in the direction of the pertinent directional pattern to execute communication processing (see ⑦ in Fig. 3). After that, the process proceeds to Step A12.

As to this kind of wireless communication system 10, a conventional method and the method of the present invention for exemplified processing of the wireless data transmission to the wireless terminal apparatus 400 [#1] is compared with each other. According to the conventional wireless communication method, the data which the wireless communication apparatus 1 has received last is the connection request signal SC from the wireless terminal apparatus 400 [#2]. Specifically, when there is no antenna table, since this signal SC is received from the antenna 502, the conventional method employs a sequence where the data is transmitted to the wireless terminal apparatus 400 [#1] using the antenna 502 again. Contrary to this, in the method of the present invention, when data is transmitted to the wireless terminal apparatus 400 [#1], the wireless communication apparatus 1 refers to the antenna table and identifies "ANT1" as the optimum antenna body for the wireless terminal apparatus 400 [#1]. Therefore, communication processing is established with the wireless terminal apparatus [#1] using the antenna 501.

When data is transmitted from the wireless terminal apparatus 400 [#1] to the wireless communication apparatus 1, the process proceeds to Step A11 where the wireless communication apparatus 1 scans the antenna switch 2 and waits for receiving an input, except for the case where the wireless communication apparatus 1 is in a transmission processing, so that data is received using the antenna 501 which receives the strongest radio wave from the communication-targeted wireless terminal apparatus 400 [#1] (see ⑧ in Fig. 3).

When the wireless terminal apparatus 400 [#1] has already moved into a communication area created by the directional pattern of the antenna 502, the radio wave from the wireless terminal apparatus 400 [#1] is received by the antenna 502 most strongly, so that data reception is made using this antenna 502. At the same time, the storing means 4 is subjected to memory control by the controller 5 so as to rewrite the antenna selection information D1 into information indicating that the optimum antenna body for the wireless terminal apparatus 400 [#1] is the antenna 502.

### [In the case where data is transmitted from the wireless communication apparatus 1 to the wireless terminal apparatus 400 [#2]]

In this case as well, the wireless communication apparatus 1 refers to the antenna table in Step A8 to select "ANT 2" which is the optimum antenna body for the wireless terminal apparatus 400 [#2] . Then, an antenna selection signal S1 is outputted to the antenna switch 2 based on the antenna selection information D1. As a result, the contact point b1 connected with the antenna 502 is connected with the transceiver means 3. By use of the antenna 502 connected here, data is transmitted, etc. to the wireless terminal apparatus 400 [#2] located in a direction of the pertinent directional pattern in Step A10 to make communication processing (see ⑨ in Fig. 3). After that, the process proceeds to Step A12.

As to this kind of wireless communication system 10, a conventional method and the method of the present invention for exemplified processing of the wireless data transmission to the wireless terminal apparatus 400 [#2] is compared with each other. According to the conventional wireless communication method, the data which the wireless communication apparatus 1 has received last is the data from the wireless terminal apparatus 400 [#1]. Specifically, when there is no antenna table, since this data is received from the antenna 501, the conventional method employs a sequence where the data is transmitted to the wireless terminal apparatus 400 [#2] using the antenna 501 again. Contrary to this, in the method of the present invention, when data is transmitted to the wireless terminal apparatus 400 [#2], the wireless communication apparatus 1 refers to the antenna table and identifies "ANT2" as the optimum antenna body. Therefore, data transmission to the wireless terminal apparatus 400[#2] is made using the antenna 502.

When the wireless terminal apparatus 400 [#2] transmits data to the wireless communication apparatus 1, in Step A11 where, as described above, the wireless communication apparatus 1 scans the antenna switch 2 and waits for receiving an input, except for the case where the wireless communication apparatus 1 is in the transmission processing, so that data is received using the antenna 502 which receives the strongest radio wave from the communication-targeted wireless terminal apparatus 400. After that, the process proceeds to Step A12. In Step A12, it is checked whether or not to terminate this communication processing. For example, power supply off information is detected and this communication processing is terminated. If this communication processing should not be terminated, the process returns to Step A7 where it is checked whether or not to transmit data and then, the above-described processing is repeated.

As described above, according to the wireless communication system 10 as the first embodiment according to the present invention, when wireless communication processing is made between the wireless communication apparatus 1 as a wireless base station and an arbitrary wireless terminal apparatus 400, the wireless communication apparatus 1 regularly or irregularly performs identification processing of the communication-targeted wireless terminal apparatus 400 located within the communication area created by each of the directional patterns of the individual antennas 501, 502, and the correspondence relationship between the communication-targeted wireless terminal apparatus 400 and each of the antennas 501, 502 is stored. At the time of making wireless communication, either one of the antennas 501, 502 which corresponds to the pertinent wireless terminal apparatus 400 is selected based on this storage processing. Therefore, since the optimum antenna 501 or 502 which corresponds to the pertinent wireless terminal apparatus 400 is always selectable, even when data is transmitted to the wireless terminal apparatus 400 [#2] located within the communication area at the back side immediately after data from the wireless terminal apparatus 400 [#1] located within the communication area at the front side is received, wireless communication processing can be made with the wireless terminal apparatus 400 [#2] located in the pertinent directional pattern using the optimum antenna 502. Further, as compared with the conventional method, wireless communication processing can be made optimally without interruption of the communication contents. Due to these, when this system 10 is employed at the access point of a wireless LAN and the like, it greatly contributes to an improvement in the wireless communication quality.

### (2) Second embodiment

The second embodiment is an embodiment as a lower concept in which a stationary base station 101 (channel-selection apparatus) 101 having a wireless communication function as an example of a wireless communication apparatus is provided, and also two portable terminal display apparatuses 401, 402 each having wireless communication function as communication-targeted wireless terminal apparatuses are provided, so as to constitute a wireless LAN system 100. The base station 101 includes two diversity antennas having different directivities from each other (hereinafter, simply referred to as "antennas 501, 502"), and in the base station 101, identification processing of each of the communication-targeted display apparatuses 401, 402 located within the communication areas created by each of the directional patterns of the individual antennas 501, 502, is regularly or irregularly performed, so that storage processing of the correspondence relationship between each of the communication-targeted display apparatuses 401, 402 etc. and each of the antennas 501, 502 is performed. At the time of making wireless communication, selection processing of either one of the antennas 501, 502, which corresponds to the pertinent display apparatus 401 or 402 is performed.

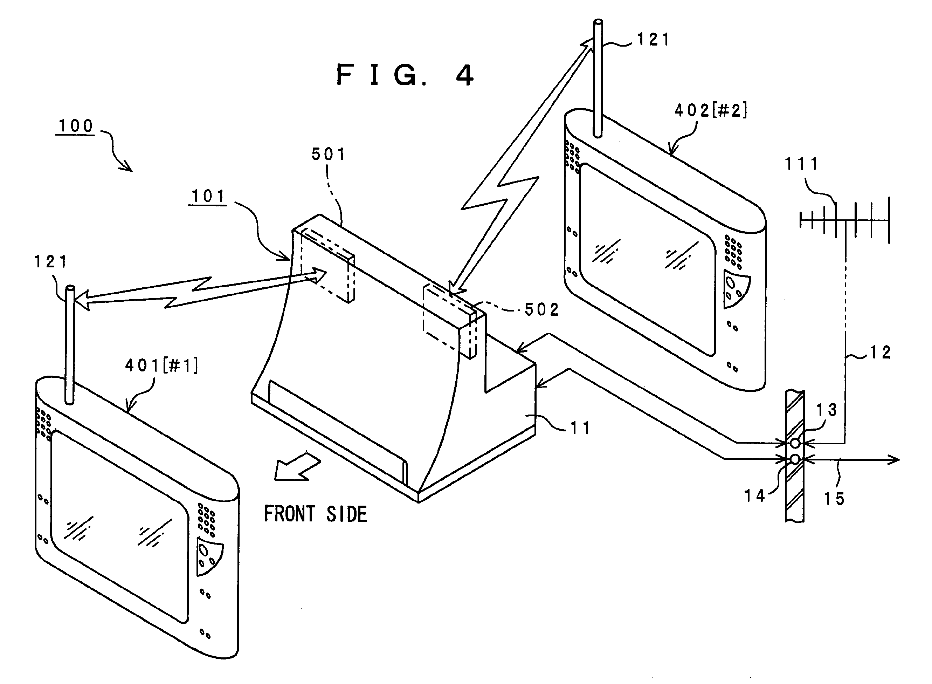

The wireless LAN system 100 shown in Fig. 4 is a system that makes wireless communication processing between the stationary base station 101 having a wireless communication function and the portable terminal display apparatuses 401, 402 etc. having a wireless communication function. In this system 100, the communication-targeted display apparatus 401 is located within the communication area created by one of the directional patterns of the base station 101, whereas the communication-targeted display apparatus 402 is located within the communication area created by the other directional pattern, or the communication-targeted display apparatuses 401, 402, etc. move between the communication areas created by these directional patterns. For example, the display apparatus 401 is located in a direction of the directional pattern of the antenna 501, whereas the display apparatus 402 is located in a direction of the directional pattern of the antenna 502. In the wireless LAN system 100, such a usage pattern is employed.

The base station 101 performs identification processing of the communication-targeted display apparatuses 401, 402 etc. located within the communication area created by each of the directional patterns of the individual antennas 501, 502, and performs storage processing of the correspondence relationship between each of the communication-targeted display apparatuses 401, 402 and each of the antennas 501, 502 into antenna selection information D1 as well as it performs, in wireless data transmission, selection processing of either one of the antennas 501, 502 which corresponds to this display apparatus 401 or 402 based on the read processing of the antenna selection information D1 stored beforehand.

In this system 100, the base station 101 regularly or irregularly transmits data for confirming the communication area to the communication-targeted display apparatuses 401, 402. As a result, even when the communication-targeted display apparatuses 401, 402, etc. move between the communication areas created by these directional patterns, it is possible to detect the correspondence relationship between the optimum antenna 501 or 502 and each of these display apparatus 401 or 402 etc.

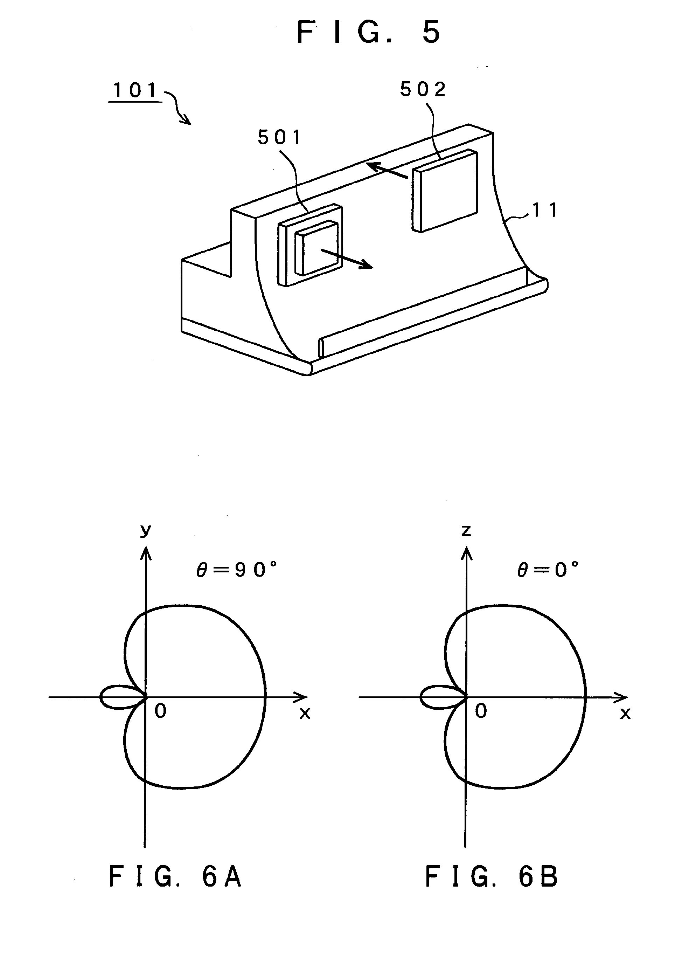

The antennas 501, 502 shown in Fig. 5 are attached inside the apparatus main body 11 of the base station 101. The antenna 501 is attached to the inner front side of the apparatus main body 11, for example, and has a directional pattern in the front side direction of the apparatus main body 11. The antenna 502 is attached to the inner back side of the apparatus main body 11, and has a directional pattern in the back side direction of the apparatus main body 11. As both of the antennas 501, 502, diversity antennas such as micro-strip antennas etc. are used. As shown in Fig. 6, each of the directional patterns of these antennas 501, 502 is in a half-round shape, defining the angle θ formed by the antenna wave director and the arrived radio wave as 90° in the directional characteristics on the horizontal plane (x-y flat plane), and is in a half-round shape at the half-power angle φ of 0° indicating the range where a half or more of the electric power is available in the maximum sensitivity direction in the directional characteristics on the vertical plane (x-z flat plane).

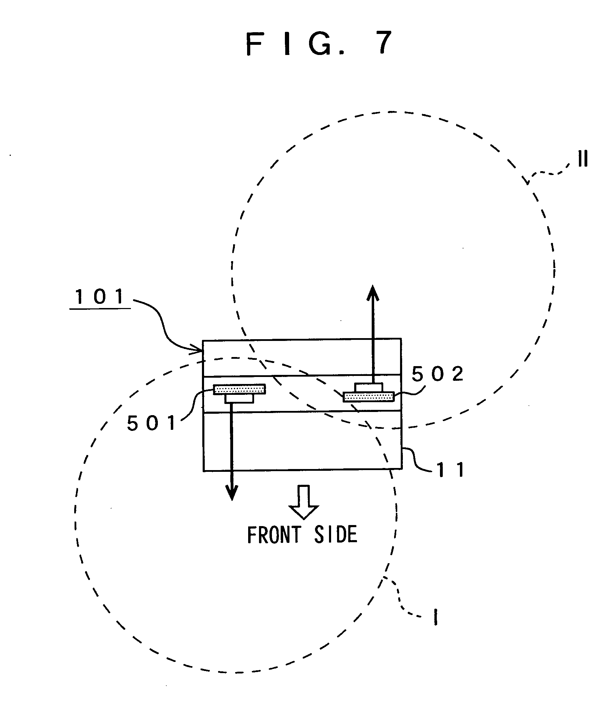

Fig. 7 is a conceptual diagram showing an example of the formation of communication areas I, II of the base station 101. On the front surface of the apparatus main body 11 of the base station 101 shown in Fig. 7, the communication area I created by the directional pattern in the front side direction described above is formed. When the display apparatus 401 or 402 etc. is located in or moved into the communication area I, in the base station 101, the communication processing is established using the antenna 501. Further, on the back surface of the apparatus main body 11, the communication area II created by the directional pattern in the backside direction described above is formed. When the display apparatus 401 or 402 etc. is located in or moved into the communication area II, in the base station 101, the communication processing is established using the antenna 502. This is because using the optimum antennas 501 and 502 allows wireless communication processing with the display apparatus 401 or 402 located within the communication area created by the pertinent directional pattern to be carried out.

### [Base station]

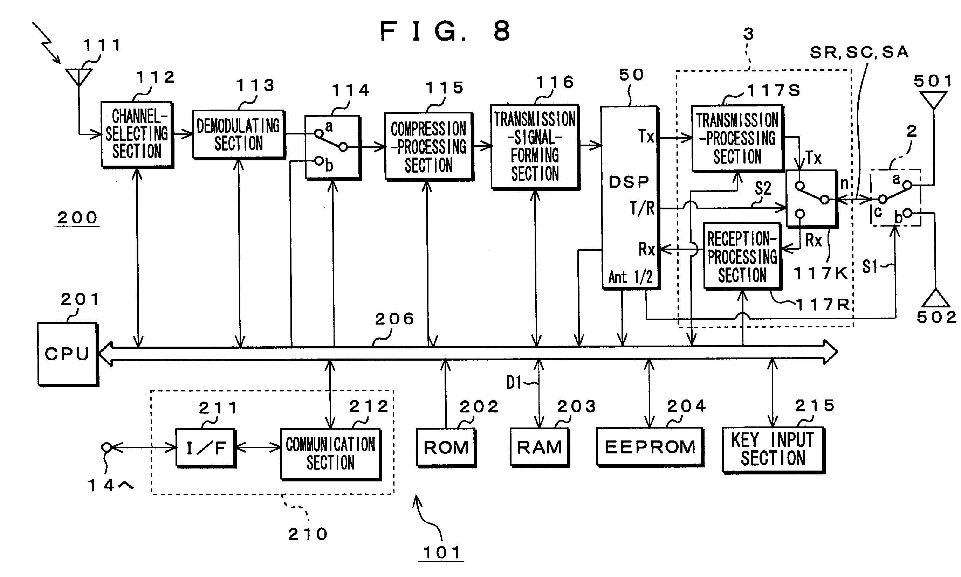

Fig. 8 is a block diagram showing an exemplary structure inside the base station 101. In order to arbitrarily make wireless communication processing with the communication-targeted display apparatuses 401, 402, etc. in the wireless LAN system 100, the base station 101 includes at least two antennas 501, 502, an antenna switch 2, transceiver means 3, an RAM 203, and a DSP 50. Further, the base station 101 also has functions as an interface for taking television broadcast signals in and various kinds of information supplied through telephone line 15 into a television receiving system and transmitting information from the television receiving system into a communication network through the telephone lines 15.

Each section of the base station 101 is controlled by a controlling section 200 which is an example of a controller. As shown in Fig. 8, the controlling section 200 is a microcomputer in which a CPU (Central Processing Unit) 201, an ROM (Read Only Memory) 202, an RAM (Random Access Memory) 203, an EEPROM (Electrically Erasable Programmable Read Only Memory) 204 are connected with each other through a CPU bus 206. The ROM 202 stores various processing programs to be executed in the base station 101and data required for information processing. The RAM 203 is an example of storing means and is connected to the CPU bus 26, and it stores antenna selection information D1 indicating the correspondence relationship between the communication-targeted display apparatus 401 or 402 etc. and each of the antennas 501, 502. The RAM 203 is mainly used as a work area for executing various kinds of processing such as temporarily storing and holding data obtained in various kinds of processing.

In this example, the antenna selection information D1 is information to be used for selecting either one of two antennas 501, 502. The antenna selection information D1 is corresponded to ID information of the communication-targeted display apparatuses 401, 402 located within the communication area created by each of the directive patterns so as to constitute an antenna table. Thus- obtained antenna table enables to be managed the optimum antenna 501 or 502 for the communication-targeted display apparatus 401 or 402 etc. located within the communication area created by each of the directional patterns.

The antenna selection information D1 is updated in order to make wireless communication processing using the optimum antenna 501 or 502. For example, the CPU 201 executes memory control to the RAM 203 so as to rewrite (overwrite) the contents of the RAM 203. As a result of this control, the contents on the antenna table are updated. This is because occurrence of a case where the communication-targeted display apparatus 401 or 402 etc. move from the communication area created by the pertinent directional pattern into the other communication area created by the other directional pattern is supposed. The EEPROM 204 is a so-called non-volatile memory, and the information stored and held therein is never lost even when the power supply is shut down. For example, the EEPROM 204 is structured to realize a so-called last channel memory function in which the EEPROM 204 stores and holds the information of the broadcast channel that is in a selected state up to the moment immediately before the main power supply of the base station 101 is shut down, and after the power supply is turned on, it selects the broadcast signal of the channel that is in a selected state up to the moment immediately before the main power supply is shut down at the previous time.

According to the base station 101, an antenna cable 12 extending from the antenna 111 for receiving television broadcast located outdoors is connected to a channel-selecting section 112 in the base station 101 through a connection terminal 13. The television broadcast signal received by the antenna 111 is supplied to the channel-selecting section 112. The channel-selecting section 112 selects a television broadcast signal corresponding to the channel-selection command signal supplied from the controlling section 200 among the television broadcast signals supplied from the receiving antenna 111, and supplies the selected television broadcast signal to a demodulating section 113. The demodulating section 113 demodulates the television broadcast signal supplied thereto, and supplies thus-demodulated signal (a television program signal) to an input terminal a of the switch circuit 114.

The switch circuit 114 is controlled by the switching control signal supplied from the controlling section 200 so that the switching circuit 114 can switch between a state where the television program signal supplied from the demodulating section 113 to the input terminal "a" is to be outputted and a state where the signal supplied from the controlling section 200 to the input terminal "b" is to be outputted. As also will be described later, the signal supplied from the controlling section 200 to the switching circuit 114 is electronic mails or so-called information of home pages of internet which is supplied to the base station 101 through the telephone line 15 and is received through a modem section 210 for communication.

The signal that is outputted from the switching circuit 114 is supplied to a compression-processing section 115. The compression-processing section 115 performs data compression to the signal supplied thereto by a predetermined compression method. In this compression-processing section 115, the signal supplied from the switching circuit 114 is data-compressed using the MPEG (Moving Picture Expert Group) method or the Wavelet method. The signal after the data compression in the compression-processing section 115 is supplied to a transmission-signal-forming section 116. The transmission-signal-forming section 116 forms a transmission signal which conforms to a communication protocol determined beforehand. In the base station 101, a transmission signal which conforms to a protocol of IEEE (Institute Electrical and Electronics Engineers) 802.11 method or a protocol evolved therefrom is formed.

To the transmission-signal-forming section 116, a DSP (Digital Signal Processor) 50 constituting the controller is used for identifying each of the communication-targeted display apparatuses 401 and 402 located within the communication area created by each of the directional patterns and recognizing the correspondence relationship between each of these communication-targeted display apparatuses 401, 402,etc. and the antenna 501 or 502. The DSP 50 selects either one of the antennas 501, 502 which corresponds to this display apparatus 401 or 402 etc., and makes communication processing with the display apparatus 401 or 402 etc. located in the direction of the pertinent directional pattern using the selected antenna 501 or 502.

Further, the DSP 50 is structured to regularly or irregularly transmit data for confirming the communication area to the communication-targeted display apparatuses 401 and 402. For example, when the power supplies of both of the base station 101 and the display apparatuses 401 and 402 etc. are turned on, the base station 101 is made to confirm the communication-targeted display apparatuses 401 and 402 etc. located within the communication area created by each of the directional patterns. Due to this arrangement, it becomes possible to detect the correspondence relationship between the optimum antenna 501 or 502 and this display apparatus 401 or 402 etc.

The transmission signal after the digital processing in the DSP 50 is supplied to the transceiver means 3. The transceiver means 3 includes a transmission-processing section 117S, a common section 117K, and a reception-processing section 117R. The transmission signal from the DSP 50 is supplied to the transmission-processing section 117S. The transmission-processing section 117S modulates or amplifies the transmission signal in response to the control signal supplied from the controlling section 200. The transmission-processing section 117S, for example, transmits a reference signal SR, a connection response signal SA, data DOUT etc. to the communication-targeted display apparatuses 401 and 402 etc.

The transmission signal processed in the transmission-processing section 117S is outputted to the common section 117K. The common section 117K is structured so as to switch between the output of the transmission signal Tx and the input of the reception signal Rx, based on the transmission/reception switching signal S2 outputted from the DSP 50. This switching behavior is made in order to prevent the transmission signal Tx and the reception signal Rx from intervening each other. Specifically, as described above, this base station 101 is structured so as to be capable of receiving the command information, which is sent from the display apparatuses 401 and 402 etc. by wireless transmission, through the antennas 501, 502. Therefore, the common section 117K prevents the transmission signal Tx sent from the transmission-processing section 117S from intervening the reception signal Rx received through the antenna 501 or 502. To the common section 117K, connected is an antenna switch 2. The common contact point "c" of the antenna switch 2 is connected to a common point n of the common section 117K.

The antenna switch 2 is made to switch between the antennas 501 and 502 based on an antenna selection signal S1. The antenna selection signal S1 is supplied from the DSP 50. To the antenna switch 2, the antennas 501, 502 are connected. As the antennas 501, 502, diversity antennas are used. The antenna 501 is attached to the inner front side of the apparatus main body of the base station 101, for example, and has a directional pattern in its front side direction. The antenna 502 is attached to the inner back side of the apparatus main body of the base station 101, and has a directional pattern in its back side direction. Signals such as those for instructing channel selection, for example, received from the display apparatus 401 or 402 etc. through the antenna 501 or 502 are supplied to the reception-processing section 117R through the common section 117K. The reception-processing section 117R performs reception processing of the connection request signal SC supplied from the communication-targeted display apparatus 401 or 402 etc. The reception-processing section 117R performs a processing such as demodulation to the signal supplied thereto to convert it into a signal which the controlling section 200 can deal with, and supplies the resultant signal to the controlling section 200. When the signal from the reception-processing section 117R is a command signal for instructing channel selection and the like, the controlling section 200 controls each section in response to the command signal. Therefore, when the signal supplied from the reception-processing section 117R to the controlling section 200 is a signal for instructing channel selection, the controlling section 200 supplies a channel-selection command signal corresponding to the supplied channel instruction to the channel-selecting section 112, thereby changing the television broadcast signal to be selected.

When the signal supplied from the reception-processing section 117R to the controlling section 200 is transmission information such as an electronic mail, as also will be described later, the controlling section 200 connects the telephone line through the modem section 210 and the telephone line 15, and sends the transmission information to the connected telephone line to transmit it to the communication target. As shown in Fig. 8, the modem section 210 includes an interface (shown as I/F in Fig. 8) section 211 and a communicating section 212. The I/F section 211 is an interface between a communication line connected between the communication target and the base station 101 through the telephone network, and this base station 101, and receives a signal transmitted through the telephone line (telephone line 15) or transmits a signal supplied from the base station 101. The telephone line 15 is drawn into a house through a connection terminal 14.

The communicating section 212 demodulates the signal received through the I/F circuit 211, supplies thus-demodulated signal to the controlling section 200, modulates the transmission signal supplied from the controlling section 200, and supplies thus-modulated signal to the I/F circuit 211. This arrangement enables transmission and reception of various kinds of data to be executed with the communication target to which the telephone line is connected.

As described above, the base station 101 connects with the internet through the modem section 210, the telephone line 15, and a predetermined ISP (Internet Service Provider), and receives various kinds of information through the internet. In this embodiment, transmission and reception of electronic mails are enabled and chat can be enjoyed. Therefore, the controlling section 200 can control the modem section 210 in such a manner that the modem section 210 is off-hooked or on-hooked etc. and has a function as so-called dialer which sends a dial signal to the telephone line 15 when the modem section 210 is controlled to be off-hooked. It is noted that, in Fig. 8, to the controlling section 200, a key input section 215 which includes a power supply turning on/off key and various setting keys is connected and, through the key input section 215, the main electric power of the base station 101 can be turned on and off and various setting can be input.

As described above, the base station 101 can receive a television broadcast signal, and select a channel and demodulate it, and data-compress thus demodulated signal of the television broadcast program and send it by wireless transmission in accordance with a predetermined communication protocol. Further, it also can receive network information supplied through the telephone line and demodulate it, and data-compress thus-demodulated information as is the case of the television broadcast signal and send it by wireless transmission in accordance with a predetermined communication protocol. Further the base station 101 can receive command information such as instruction for channel selection sent by wireless transmission from the display apparatuses 401 and 402 etc., which will be described later, execute a processing in accordance with thus-received information, and transmit through the modem section 210 the transmission information such as electronic mails transmitted from the display apparatuses 401 and 402 etc.

### [Display apparatuses]

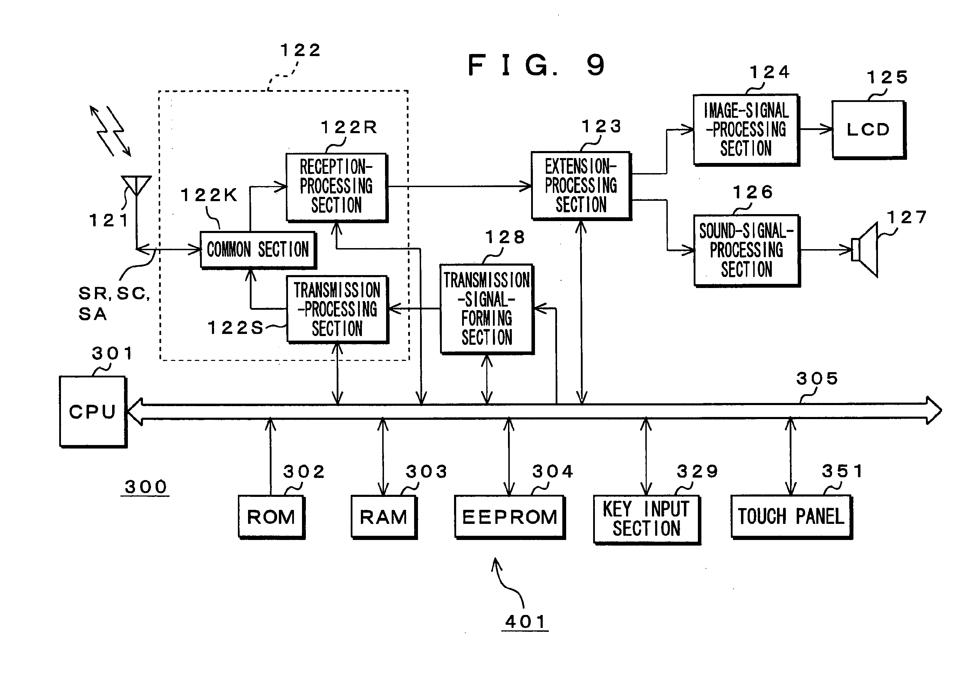

The display apparatuses 401 and 402 etc. shown in Fig. 9 individually constitute a portable terminal display apparatus, and are connected to the above-described base station 101 by wireless connection. The display apparatuses 401 and 402 etc. are individually controlled by a controlling section 300 of a micro-computer constituted by connecting a CPU 301, an ROM 302, an RAM 303, and an EEPROM 304 through a CPU bus 305. To the CPU bus 305, in addition to the controlling section 300, a transceiver wireless section 122, an extension-processing section 123, a transmission-signal-forming section 128, a key input section 329, and a touch panel 351 are also connected. The transceiver wireless section 122 includes a common section 122K, a transmission-processing section 122S, and a reception-processing section 122R. To the extending section 123, an image-signal-processing section 124 and a sound-signal-processing section 126 are connected.

The ROM 302 connected to the CPU bus 305 stores various processing programs to be executed in the display apparatuses 401 and 402 etc. and data required for kinds of the processing. The RAM 303 is mainly used as a work area for executing various kinds of processing such as temporarily storing and holding data obtained in the various kinds of processing. The EEPROM 304 is a so-called non-volatile memory, and the information stored and held therein is never lost even when the power supply is shut down and, for example, it can store and hold the various kinds of setting parameters, created electronic mails, received electronic mails, contents of chats (text data).

When a wireless signal from the base station 101 is received in this system, the display apparatuses 401 and 402 etc. operate as follows. A wireless signal (a wireless signal SR etc.) based on a predetermined communication protocol sent from the base station 101 is received by an antenna 121 for transmission/reception shown in Fig. 9, and is supplied to the reception-processing section 122R thorough the common section 122K. The reception-processing section 122R performs processing such as demodulation to the signal supplied thereto, and supplies thus-demodulated signal to the extension-processing section 123.

As described above, the signal sent from the base station 101 by wireless transmission is data-compressed, so that the extension-processing section 123 of each of the display apparatuses 401, 402, etc. extends the modulated signal supplied from the base station 101 so as to reconstitute it into an original signal. If the reconstituted signal is a signal of, for example, a television broadcast program, the reconstituted signal is made of an image signal and a sound signal, so that the image signal is supplied to the image-signal-processing section 124, whereas the sound signal is supplied to the sound-signal-processing section 126.

The image-signal-processing section 124 forms a signal for display from the image signal supplied from the extension-processing section 123, and supplies it to an LCD 125 in a touch-panel system. As a result, an image corresponding to the image signal sent from the base station 101 by wireless transmission is displayed on the LCD 125. On the other hand, the sound-signal-processing section 126 forms a sound signal to be supplied to a speaker 127 from the sound signal supplied thereto, and supplies it to the speaker 127. The speaker 127 is connected to the sound-signal-processing section 126. As a result, a sound corresponding to the sound signal sent from the base station 101 by wireless transmission is offered from the speaker 127. As described above, the display apparatuses 401, 402, etc. receive a signal of a television broadcast program sent from the base station 101 by wireless transmission, and reproduce and output an image signal and a sound signal of thus-received signal, thereby providing them to the user.

Subsequently, a wireless LAN communication method according to the present invention will be described by way of exemplified processing modes when the display apparatus is identified and the wireless data is transmitted in this wireless LAN system 100. In these examples, description will be made as to two examples of the processing individually, that is, an exemplary processing in the base station 101 and an exemplary processing in the display apparatus 401, 402, etc.

### [Base station side]

In the second embodiment, when wireless communication processing is arbitrarily made with the communication-targeted display apparatuses 401, 402, etc., an antenna 501 having a directional pattern in a front side direction of an apparatus main body 11, and an antenna 502 having a directional pattern in the back side direction of the apparatus main body 11 are provided to a base station 101 as well as two communication-targeted display apparatuses 401, 402 that are capable of making wireless communication are prepared beforehand within the communication areas created by the directional patterns. In the case where such the two antennas 501, 502 having different directional patterns from each other are provided, the base station 101 transmits, at the time of identifying the display apparatus, a reference signal to the communication-targeted display apparatuses 401, 402 within the pertinent directional pattern from both of the antennas 501, 502 alternately. As shown in Fig. 4, the positions of the communication-targeted display apparatuses 401, 402 are assumed that the display apparatus 401 is located in a direction of the directional pattern of the antenna 501, whereas the display apparatus 402 is located in a direction of the directional pattern of the antenna 502. Each power supply of the individual display apparatuses 401, 402 is in an ON state.

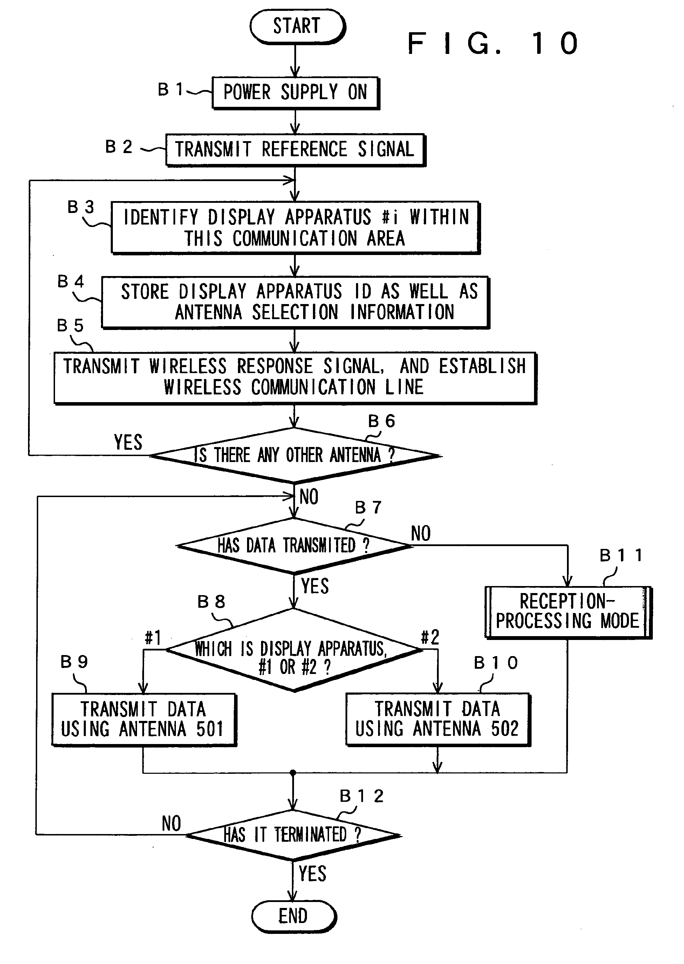

Taking the above arrangements as the preconditions for the processing, a power supply of the base station 101 is turned on in Step B1 in the flowchart shown in Fig. 10. Then, the process proceeds to Step B2 where the reference signal SR is transmitted to the communication-targeted display apparatus #1 located within the communication area created by the directional pattern of the antenna 501 shown in Fig. 4 (see ① in Fig. 3). Subsequently, the reference signal SR is transmitted to the communication-targeted display apparatus 402 located within the communication area created by the directional pattern of the antenna 502 (see ② in Fig. 3).

After that, in Step B3, the base station 101 is made to identify the individual communication-targeted display apparatuses 401, 402, etc. located within the communication area created by each of the directional patterns of the antennas 501, 502. At this time, the display apparatus 401 which has received the reference signal SR from the antenna 501 transmits a connection request signal SC to the base station 101 to notify a request to connect its wireless communication line. The base station 101 receives the connection request signal SC from the display apparatus 401 (see ③ in Fig. 3).

Next, storage processing of the correspondence relationship between the communication-targeted display apparatus 401 and the antenna 501 recognized here is performed in Step B4. At this time, upon receiving the connection request signal SC from the display apparatus 401, the base station 101 describes, for example, "#1" on the antenna table of the RAM 203 using the CPU 201 as the terminal ID of the display apparatus 401, and registers (sets) "ANT1" as the optimum antenna. Here, display apparatus 401 having the terminal ID of [#1] is described as the display apparatus 401 "#1". As a result, antenna setting information D1 is stored.

Further, the process proceeds to Step B5 where the base station 101 transmits a connection response signal SA to the display apparatus 400 [#1] using the antenna 501 (see ④ in Fig. 3). Then, the display apparatus 401 [#1] is connected with the base station 101 to establish the wireless communication line therebetween. After that, the process proceeds to Step B6 where it is determined whether or not the above processing has been made to another antenna. The determination at this time is made based on whether or not any of the processing for the antenna 501 and the processing for the antenna 502 has been executed in Steps B3 to B5, because two antennas 501, 502 are attached to this base station 101. Therefore, when there is another antennal to be subjected to the above processing, the process returns to Step B3 where the other communication-targeted display apparatus 402 located within the communication area created by the directional pattern of the antenna 502 is identified. At this time, the other display apparatus 402 which has already received the reference signal SR from the antenna 502 transmits a connection request signal SC to the base station 101 to notify the request to connect its wireless communication line. The base station 101 receives the connection request signal SC from the other display apparatus 402 (see ⑤ in Fig. 3).

Upon receiving this notification, process proceeds to Step B4 where the base station 101 adds "#2" as the terminal ID of the other display apparatus 402 on the antenna table using the controller 5, and sets "ANT2" as the optimum antenna body. As a result, antenna-setting information D1 is stored. Here, the display apparatus 402 having the terminal ID of "#2" is described as the display apparatus 402 [#2]. Further, the process proceeds to Step B5 where the connection response signal SA is transmitted from the antenna 502 to the display apparatus 402 [#2] so as to connect the display apparatus 402 [#2] with the base station 101, thereby establishing the wireless communication line therebetween (see ⑥ in Fig. 3). Table 2 shows an exemplary relationship between the terminal IDs of two display apparatuses 401, 402 and each of their optimum antenna bodies "ANT1", "ANT2". The antenna table of the second embodiment is created based on Table 2.

**TABLE 2**

| ANTENNA TABLE | |
|---|---|
| Display Apparatus | Antenna |
| #1 | ANT1 |
| #2 | ANT2 |

When there is no antenna to be subjected to the above processing among such antennas 501, 502, the process proceeds to Step B7 where the base station 101 determines whether or not data should be wireless-transmitted. The determination at this time is made based on whether or not a command etc. for transmitting data from this base station 101 to the display apparatus 401 [#1] or display apparatus 402 [#2] is detected. Therefore, when data is to be transmitted, the process proceeds to Step B8 where either one of the antennas 501, 502 is selected which corresponds to the communication-targeted display apparatus 401 or 402 etc. to which the data is to be transmitted.

### [In the case where data is transmitted from the base station 101 to the display apparatus 401 [#1]]

In this case, the antenna table is referred by the base station 101 in Step B8 in the flowchart shown in Fig. 10, and the optimum antenna body [ANT1] for the display apparatus 401 [#1] is selected. Then, based on the antenna selection information D1, an antenna selection signal S1 is outputted to the antenna switch 2. As a result, the contact point a1 connected to the antenna 501 is connected with the common section 117K. By use of thus-connected antenna 501, in Step B9, data transmission etc. to the display apparatus 401 [#1] located in the direction of the pertinent directional pattern is performed to execute communication processing (see ⑦ in Fig. 3). After that, the process proceeds to Step B12.

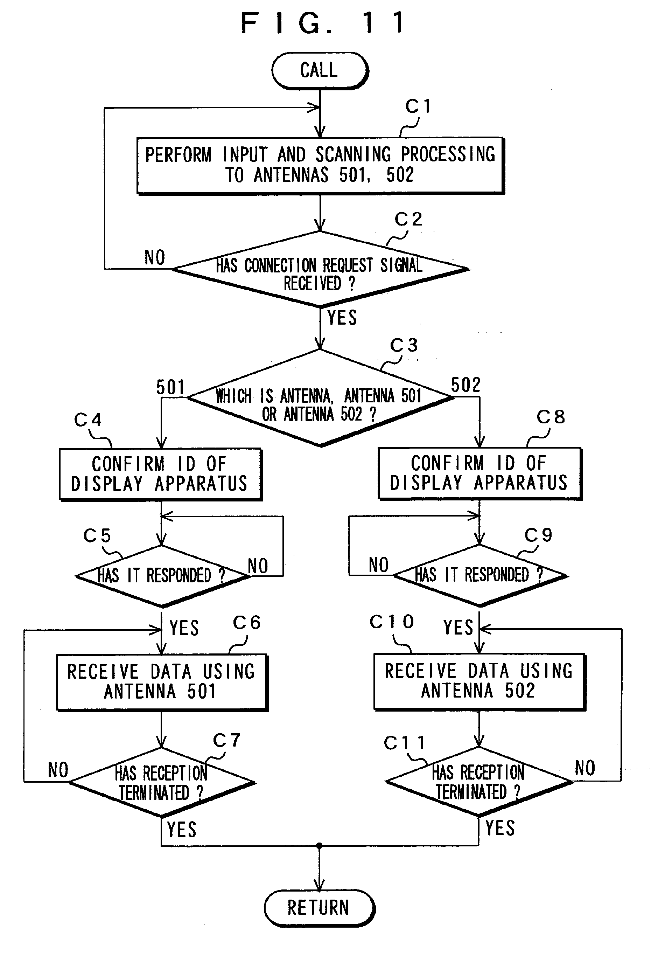

When data is transmitted from the display apparatus 401 [#1] to the base station 101, the process proceeds to Step B11 where the base station 101 scans the antenna switch 2 and waits for receiving an input, except for the case where it is in the transmission processing. For example, a subroutine shown in Fig. 11 is called and in Step C1 thereof, an input and scanning processing to the antennas 501, 502 is performed. At this time, in the common section 117K, the reception signal Rx is input. Then, the process proceeds to Step C2 where it is checked whether or not a connection request signal SC has been received. If no connection request signal SC has been received, the process returns to Step C1 where the input and scanning processing is continued.

When the connection request signal SC is received from the display apparatus 401 [#1] or 402 [#2], the process proceeds to Step C3 where it is determined which of the antennas 501, 502 is receiving stronger radio wave than the other, and either one of the antennas 501, 502 which is receiving stronger radio wave is selected. When the antenna 501 is receiving stronger radio wave, the process proceeds to Step C4 where the terminal ID of each of the display apparatus 401 [#1] or 402 [#2] etc. is confirmed. In this case, the terminal ID, "#1", of the display apparatus 401 [#1] is confirmed. Then, the process proceeds to Step C5 where it is checked whether or not a connection response signal SA has been transmitted to the display apparatus 401 [#1]. If a connection response signal SA has been transmitted to the display apparatus 401 [#1], the process proceeds to Step C6 where data is received from the display apparatus 401 [#1] using the antenna 501. After that, the process proceeds to Step C7 where it is checked whether or not all the data has already been received. If all the data still has not been received, the process returns to Step C6 where the reception is continued. If all the data has already been received, the process returns to Step B10 in the flowchart shown in Fig. 10.

Contrarily to the above, when the antenna 502 is receiving stronger radio wave in Step C3, the process proceeds to Step C8 where the terminal ID of each of the display apparatuses 401 [#1] and 402 [#2] etc. is confirmed. In this case, the terminal ID, "#2", of the display apparatus 402 [#2] is confirmed. Then, the process proceeds to Step C9 where it is checked whether or not a connection response signal SA has been transmitted to the display apparatus 402 [#2]. If a connection response signal SA has been transmitted to the display apparatus 402 [#2], the process proceeds to Step C10 where data is received from the display apparatus 402 [#2] using the antenna 502.

After that, the process proceeds to Step C11 where it is checked whether or not all the data has already been received. If all the data still has not been received, the process returns to Step C10 where the reception is continued. If all the data has already been received, the process returns to Step B10 in the flowchart shown in Fig. 10. Therefore, data is received using the antenna 501 or 502 etc. which receives the strongest radio wave from the communication-targeted display apparatus 401 [#1] or 402 [#2] (see ⑧ in Fig. 3).

When the display apparatus 401 [#1] has already moved into the communication area created by the directional pattern of the antenna 502, the radio wave from the display apparatus 401 [#1] is received by the antenna 502 most strongly, so that data reception is made using this antenna 502. At the same time, the storing means 4 is subjected to memory control by the DSP 50 so as to rewrite the antenna selection information D1 into information indicating that the optimum antenna body for the display apparatus 401 [#1] is the antenna 502.

### [In the case where data is transmitted from the base station 101 to the display apparatus 402 [#2]]

In this case as well, the CPU 201 of the base station 101 refers to the antenna table of the RAM 203 in Step B7 in the flowchart shown in Fig. 10 to select "ANT 2" which is the optimum antenna body for the display apparatus 402 [#2]. Then, an antenna selection signal S1 is outputted to the antenna switch 2 based on the antenna selection information D1. As a result, the contact point b1 connected with the antenna 502 is connected with the common section 117K. By use of the antenna 502 connected here, data transmission etc. to the display apparatus 402 [#2] located within the communication area created by the pertinent directional pattern are preformed in Step B9 to execute communication processing (see ⑨ in Fig. 3). After that, the process proceeds to Step B11.

When the display apparatus 402 [#2] transmits data to the base station 101, as has been described with reference to Fig. 11, data is received using the antenna 502 which receives the strongest radio wave from the communication-targeted display apparatus 402 [#2]. After that, the process proceeds to Step B11. In Step B11, it is checked whether or not to terminate this communication processing. For example, power supply off information is detected and this communication processing is terminated. If this communication processing should not be terminated, the process returns to Step B6 where it is checked whether or not to transmit data and then, the above-described processing is repeated.

### [Display apparatus side]

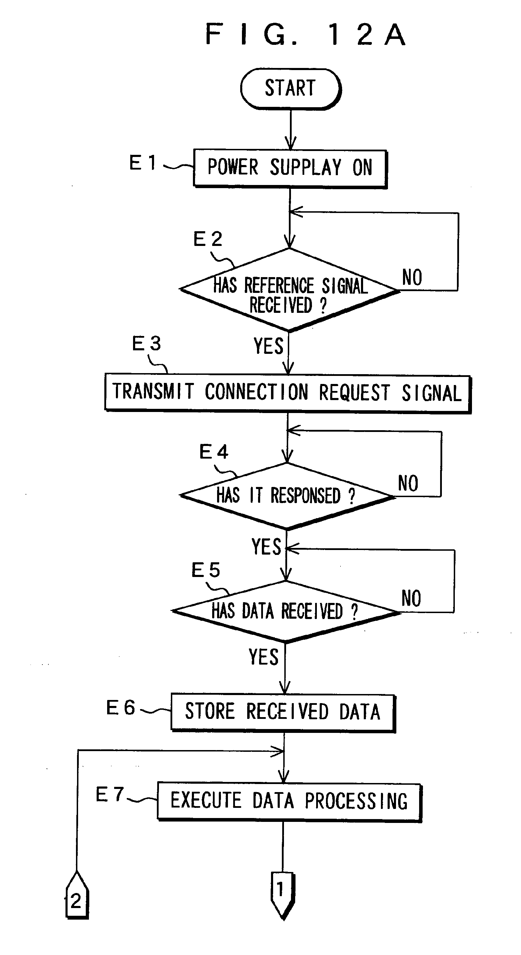

In this example, description will be made on the assumption that at the time of identifying the display apparatus, when the reference signal SR is received from the base station 101, the connection request signal SC is transmitted to the base station 101, and also at the time of transmitting data, the connection request signal SC is transmitted to the base station 101. Taking the above arrangements as the preconditions for the processing, a power supply is turned on in Step E1 in the flowchart shown in Fig. 12A. Then, the process proceeds to Step E2 where the reception of the reference signal SR is waited. When the reference signal SR is received, the process proceeds to Step E3 where the connection request signal SC is transmitted to the base station 101. After that, the process proceeds to Step E4 where the reception of the connection response signal SA is waited.

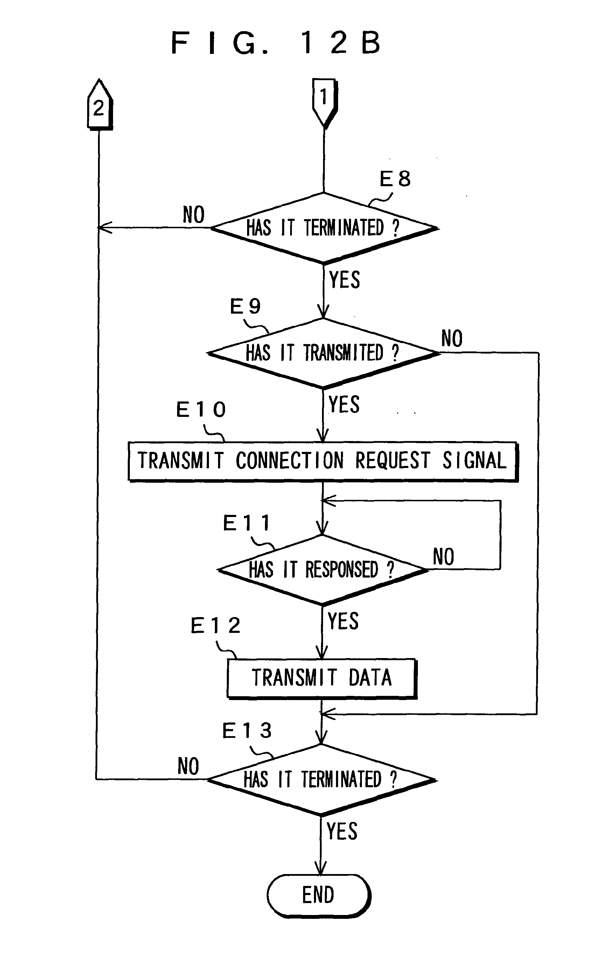

When the connection response signal SA is received, the process proceeds to Step E5 where the reception of data is waited. For example, when data such as an electronic mail or contents of chat (text data), etc. received in the base station 101 is received, the process proceeds to Step E6 where the received data is stored into the RAM 302 or the EEPROM 304. After that, the process proceeds to Step E7 where data processing such as creation of an electronic mail to be returned is performed and the process proceeds to Step E8 in flowchart of Fig. 12B where it is checked whether or not data processing has been terminated. If the data processing is still not terminated, the process returns to Step E7 where the data processing is continued.

If the data processing has been terminated, the process proceeds to Step E9 where it is checked whether or not to transmit to the base station 101 a result etc. of the processing of data such as an electronic mail to be returned. If the result of the data processing is to be transmitted to the base station 101, the process proceeds to Step E10 where a connection request signal SC is transmitted to the base station 101 and then, in Step E11, a connection response signal SA from the base station 101 is waited.

When the connection response signal SA is received from the base station 101, the process proceeds to Step E12 where data such as an electronic mail and contents of chat is transmitted to the base station 101. After that, the process proceeds to Step E13 where it is checked whether or not to terminate this communication processing. For example, power supply off information is detected and this communication processing is terminated. If this communication processing should not be terminated, the process returns to Step E7 where the data processing is continued.

As described above, according to the wireless LAN system 100 as the second embodiment according to the present invention, when wireless communication processing is made between the base station 101 as a wireless base station and two display apparatuses 401 [#1], 402 [#2] etc., the base station 101 regularly or irregularly performs identification processing of the communication-targeted display apparatuses 401 [#1], 402 [#2], etc. located within any of the communication areas I, II created by each of the directional patterns of the individual antennas 501, 502, and storage processing of the correspondence relationship between each of the display apparatuses 401 [#1], 402 [#2], etc. and each of the antennas 501, 502 is performed as an antenna table into the RAM 203. At the time of making wireless communication, selection processing of either one of the antennas 501, 502 which corresponds to this display apparatus 401 [#1] or 402 [#2] is selected based on this antenna table.

Therefore, since the optimum antenna 501 or 502 which corresponds to this display apparatus 401 [#1] or 402 [#2] is always selectable, wireless communication processing can be made with the display apparatus 401 [#1] or 402 [#2], etc. located within the communication area created by the pertinent directional pattern using the optimum antenna 501 or 502. Further, as compared with the conventional method, the wireless communication processing can be made optimally without interruption of the communication contents. Due to these advantages described above, a wireless LAN system 100 of high-quality wireless communication can be constituted.

### INDUSTRIAL APPLICABILITY

The present invention is extremely preferable for use in applications such as a wireless LAN system and a wireless communication apparatus (an access point) for a base station, which utilize 2.4GHz band or 5.2GHz band, etc.

## Claims

1. A system for making wireless communication processing between a wireless base station and an arbitrary wireless terminal apparatus, said system comprising:
a wireless communication apparatus for a base station, the apparatus including a plurality of antenna bodies each having a directional pattern in a predetermined direction; and
a wireless terminal apparatus, to become a communication target, that is capable of making wireless communication with said wireless communication apparatus for the base station,
wherein said wireless communication apparatus for the base station performs:
identification processing of the communication-targeted wireless terminal apparatus located within a communication area of each of the directional patterns of said antenna bodies regularly or irregularly;
storage processing of a correspondence relationship between said communication-targeted wireless terminal apparatus and each of said antenna bodies; and
at the time of making wireless communication, selection processing of the antenna body which corresponds to the pertinent wireless terminal apparatus based on the storage processing.

2. The wireless communication system according to claim 1,
wherein said wireless communication apparatus for the base station at least comprises:
a plurality of antenna bodies each having a directional pattern in a predetermined direction; and
a controller for allowing identifying the communication-targeted wireless terminal apparatus located within the communication area created by each of the directional patterns of said antenna bodies, and recognizing the correspondence relationship between the pertinent communication-targeted wireless terminal apparatus and each of said antenna bodies,
wherein said controller performs:
at the time of making wireless communication, selection processing of the antenna body which corresponds to the pertinent wireless terminal apparatus, and
communication processing with the wireless terminal apparatus located within the communication area created by the pertinent directional pattern, using said selected antenna body.

3. The wireless communication system according to claim 1,
wherein said communication-targeted wireless terminal apparatus is located within the communication area created by the predetermined directional pattern of said wireless communication apparatus for the base station, or said communication-targeted wireless terminal apparatus moves between the communication areas of these pertinent directional patterns.

4. The wireless communication system according to claim 1,
wherein said wireless communication apparatus for the base station comprises storing means for storing antenna selection information indicative of the correspondence relationship between said communication-targeted wireless terminal apparatus and each of said antenna bodies.

5. The wireless communication system according to claim 1,
wherein said wireless communication apparatus performs a memory control over said storing means to update said antenna selection information.

6. The wireless communication system according to claim 1,
wherein said wireless communication apparatus regularly or irregularly transmits data for confirming the communication area to said communication-targeted wireless terminal apparatus.

7. The wireless communication system according to claim 1,
wherein said wireless communication apparatus for the base station comprises at least two antenna bodies having different directional patterns from each other, and
wherein said wireless communication apparatus transmits a reference signal to the communication-targeted wireless terminal apparatus within the communication area created by the pertinent directional pattern from both of said antenna bodies alternately.

8. The wireless communication system according to claim 1,
wherein said wireless communication apparatus for the base station perform scan processing of inputs of said antenna bodies and waits for receiving data, except for the time of making the wireless transmission, and wherein said wireless communication apparatus for the base station receives the data using the antenna body that receives the strongest radio wave from said communication-targeted wireless terminal apparatus.

9. A wireless communication apparatus for arbitrarily making wireless communication with a wireless terminal apparatus, to become a communication target, said apparatus comprising:
a plurality of antenna bodies each having a directional pattern in a predetermined direction; and
a controller for allowing identifying a communication-targeted wireless terminal apparatus located within a communication area created by each of the directional patterns of said antenna bodies, and recognizing a correspondence relationship between the pertinent communication-targeted wireless terminal apparatus and each of said antenna bodies,
wherein said controller performs:
at the time of making wireless communication, selection processing of the antenna body which corresponds to the pertinent wireless terminal apparatus; and
communication processing with the wireless terminal apparatus located within the pertinent directivity using said selected antenna body.

10. The wireless communication apparatus according to claim 9, comprising storing means for storing antenna selection information indicative of the correspondence relationship between said communication-targeted wireless terminal apparatus and each of said antenna bodies.

11. The wireless communication apparatus according to claim 9,
wherein said controller performs a memory control over said storing means to update said antenna selection information.

12. The wireless communication apparatus according to claim 9,
wherein said controller regularly or irregularly transmits data for confirming the communication area to said communication-targeted wireless terminal apparatus.

13. The wireless communication apparatus according to claim 9, comprising said antenna bodies of at least two having different directional patterns from each other,
wherein the controller allows transmitting a reference signal to the communication-targeted wireless terminal apparatus within the pertinent directivity from both of said antenna bodies alternately.

14. The wireless communication apparatus according to claim 9,
wherein said controller performs scan processing of inputs of said antenna bodies and waits for receiving data, except for the time of making the wireless transmission, and
wherein the controller receives the data using the antenna body that receives the strongest radio wave from said communication-targeted wireless terminal apparatus.

15. A method for arbitrarily making wireless communication with a wireless terminal apparatus, to become a communication-target, said method comprising the steps of:
providing a plurality of antenna bodies each having a directional pattern in a predetermined direction to a wireless communication apparatus for a base station, and preparing the communication-targeted wireless terminal apparatus which is capable of wireless communication within a communication area created by the arbitrary directional pattern;
in said wireless communication apparatus for the base station,
regularly or irregularly identifying the
communication-targeted wireless terminal apparatus located within a communication area created by each of the directional patterns of said antenna bodies;
storing a correspondence relationship between said identified communication-targeted wireless terminal
apparatus and each of said antenna bodies;
at the time of making wireless communication,
selecting the antenna body which corresponds to the pertinent wireless terminal apparatus; and
performing communication processing with the wireless terminal apparatus located within the pertinent directivity using said selected antenna body.

16. The wireless communication method according to claim 15, comprising the steps of locating said communication-targeted wireless terminal apparatus within the communication area created by the predetermined directional pattern of said wireless communication apparatus for a base station, or allowing said communication-targeted wireless terminal apparatus to move between the communication areas created by these directional patterns.

17. The wireless communication method according to claim 15, comprising the step of creating antenna selection information indicative of the correspondence relationship between said communication-targeted wireless terminal apparatus and each of said antenna bodies.

18. The wireless communication method according to claim 15, comprising the step of updating said antenna selection information.

19. The wireless communication method according to claim 15, comprising the step of regularly or irregularly transmitting data for confirming the communication area to said communication-targeted wireless terminal apparatus.

20. The wireless communication method according to claim 15, further comprising the steps of:
providing said antenna bodies of at least two having different directivities from each other; and
transmitting a reference signal through both of said antenna bodies to the communication-targeted wireless terminal apparatus within the pertinent directivity alternately.

21. The wireless communication method according to claim 15, comprising the steps of:
except for the time of making the wireless transmission,
performing scan processing of inputs of said antenna bodies and waiting for receiving data; and
receiving the data using the antenna body that receives the strongest radio wave from said communication-targeted wireless terminal apparatus.
